# DEMANDE DE BREVET EUROPEEN

(11) **EP 2 218 599 A1**
(43) Date de publication de la demande: **18.08.2010**
(21) Numéro de dépôt: 10152816.4
(22) Date de dépôt: 05.02.2010
(51) Int. Cl.: B60H 3/00, B60R 11/00

(54) **Dispositif de support d'équipement à diffuseur de produit volatile, pour un élément de véhicule**

(30) Priorité: 13.02.2009 FR 0950925
(71) Demandeur: Peugeot Citroën Automobiles SA, 78140 Vélizy-Villacoublay (FR)
(72) Inventeur: Bruneau, Thierry, 92500, RUEIL MALMAISON (FR)
(74) Mandataire: Vigand, Régis Louis Michel

(57) **Abrégé**

Un dispositif (D) est dédié au support d'un équipement (TC) et comprend i) une embase (EB), propre à être solidarisée à un élément (PB) d'un véhicule et munie de premiers moyens de fixation (MF1) agencés pour maintenir un équipement (TC) de façon amovible, et ii) un corps (CD) solidarisé à l'embase (EB), muni d'une partie évidée (PE) logeant un produit volatil (PV) à diffuser et comprenant des deuxièmes moyens de fixation (MF2) agencés pour solidariser l'embase (EB) à l'élément (PB).

## Description

L'invention concerne les dispositifs de support qui sont destinés à supporter des équipements, de façon amovible, dans des véhicules, éventuellement automobiles.

On entend ici par « équipement » tout type d'objet pouvant être solidarisé à un élément situé à l'intérieur d'un véhicule, comme par exemple une planche de bord ou une console, en vue d'être utilisé par un passager. Ainsi, il pourra par exemple s'agir d'un terminal de communication mobile (ou cellulaire ou encore portable) ou d'un dispositif de guidage (ou d'aide à la navigation), éventuellement de type GPS.

De nombreux dispositifs de support du type précité, de type dédié ou universel, ont déjà été proposés. Ils comprennent généralement une embase destinée à être solidarisée à un élément d'un véhicule et munie de moyens de fixation chargés de maintenir un équipement de façon amovible.

La solidarisation de l'embase à un élément se fait par l'intermédiaire de moyens de fixation qui se présentent fréquemment sous la forme d'une ventouse placée à une première extrémité d'un pied (ou bras), souvent articulé ou flexible (ou encore conformable), et présentant une seconde extrémité solidarisée à l'embase. Dans le cas d'un véhicule automobile, la ventouse est généralement solidarisée à un élément de type pare-brise ou partie supérieure d'une planche de bord. Or, lorsque l'on désolidarise la ventouse de l'élément qui la supporte, par exemple pour cacher le dispositif de support dans un réceptacle tel qu'une boîte à gants ou pour pouvoir l'utiliser dans un autre véhicule, il arrive fréquemment que la trace de la ventouse demeure sur l'élément pendant un certain temps. Cette trace de dispositif de support peut attirer l'attention d'une personne mal intentionnée qui peut alors être tentée de pénétrer par effraction dans le véhicule pour y dérober l'équipement qui est susceptible d'être supporté par le dispositif de support désolidarisé.

L'invention a pour but de proposer un dispositif de support alternatif qui ne laisse pas de trace sur l'élément qui le supporte lorsqu'il est désolidarisé de ce dernier.

Elle propose à cet effet un dispositif, dédié au support d'équipement, et comprenant une embase destinée à être solidarisée à un élément d'un véhicule et munie de premiers moyens de fixation agencés pour maintenir un équipement de façon amovible.

Ce dispositif de support se caractérise par le fait qu'il comprend en outre un corps solidarisé (directement ou indirectement) à son embase, muni d'une partie évidée logeant un produit volatil à diffuser et comprenant des deuxièmes moyens de fixation agencés pour solidariser (indirectement) l'embase à l'élément.

Le dispositif de support selon l'invention peut comporter d'autres caractéristiques qui peuvent être prises séparément ou en combinaison, et notamment :
- son corps peut comprendre des troisièmes moyens de fixation agencés pour le solidariser de façon amovible à une partie choisie de l'embase ;
   ➢ la partie choisie peut être par exemple une paroi inférieure de l'embase qui est munie d'un orifice propre à coopérer avec les troisièmes moyens de fixation en vue de la solidarisation du corps ;
      - l'orifice peut par exemple être muni d'un filetage interne. Dans ce cas, les troisièmes moyens de fixation peuvent être agencés sous la forme d'un filetage externe propre à coopérer avec le filetage interne ;
      - en variante, les troisièmes moyens de fixation peuvent par exemple être agencés sous la forme d'au moins deux pattes élastiques qui définissent des moyens de clippage (ou des crans) ;
- les deuxièmes moyens de fixation peuvent être agencés sous la forme d'un filetage externe propre à coopérer avec un filetage interne d'un orifice, défini dans une partie choisie de l'élément du véhicule, en vue de la solidarisation du corps de façon amovible par vissage ;
- en variante, les deuxièmes moyens de fixation peuvent être agencés sous la forme d'au moins deux pattes élastiques définissant des moyens de clippage (ou crans) propres à coopérer avec un orifice, défini dans une partie choisie de l'élément du véhicule, en vue de la solidarisation du corps de façon amovible par clippage ;
- dans une autre variante, les deuxièmes moyens de fixation peuvent être agencés sous la forme d'au moins deux pattes rigides définissant des moyens de verrouillage à baïonnette propres à coopérer avec des logements d'un orifice, défini dans une partie choisie de l'élément du véhicule, en vue de la solidarisation du corps de façon amovible par rotation de type « quart de tour » ;
- il peut comprendre une pièce d'adaptation comportant une première extrémité, propre à être solidarisée de façon amovible au corps, et une seconde extrémité, propre à être solidarisée de façon amovible à l'embase ;
- au moins une partie de la partie évidée du corps peut être destinée à être logée à l'intérieur d'un conduit d'aération du véhicule, délimité au moins partiellement par une partie choisie de l'élément.

L'invention est particulièrement bien adaptée, bien que de façon non limitative, au cas où le dispositif de support est chargé de supporter un équipement qui est choisi parmi au moins un terminal de communication mobile (ou cellulaire ou encore portable) et un dispositif de guidage (ou d'aide à la navigation), éventuellement de type GPS.

D'autres caractéristiques et avantages de l'invention apparaîtront à l'examen de la description détaillée ci-après, et des dessins annexés, sur lesquels :
- la figure 1 illustre schématiquement, dans une vue en perspective, une partie d'un exemple d'élément de voiture, de type planche de bord, avant l'installation d'un dispositif de support selon l'invention,
- la figure 2 illustre schématiquement, dans une vue en perspective, un exemple de réalisation d'une embase d'un dispositif de support selon l'invention,
- la figure 3 illustre schématiquement, dans une vue en coupe transversale au niveau de l'orifice 02, l'embase de la figure 2,
- la figure 4 illustre schématiquement, dans une vue en coupe transversale, un exemple de réalisation d'un corps diffuseur d'un dispositif de support selon l'invention, propre à être solidarisé à l'embase des figures 2 et 3,
- la figure 5 illustre schématiquement, dans une vue en coupe transversale, le corps diffuseur de la figure 4 une fois solidarisé à l'embase des figures 2 et 3 pour constituer ensemble un dispositif de support selon l'invention,
- la figure 6 illustre schématiquement, dans une vue en coupe transversale, le dispositif de support de la figure 5 après installation d'un équipement de type dispositif de guidage, et
- la figure 7 illustre schématiquement, dans une vue en coupe transversale, le dispositif de support de la figure 5, avec son équipement, une fois solidarisé à l'élément de voiture de la figure 1.

Les dessins annexés pourront non seulement servir à compléter l'invention, mais aussi contribuer à sa définition, le cas échéant.

L'invention a pour but d'offrir un dispositif de support d'équipement (D) destiné à être solidarisé de façon amovible sur un élément (PB) de véhicule, et ne laissant pas de trace sur cet élément (PB) lorsqu'il en est désolidarisé.

Dans ce qui suit, on considère, à titre d'exemple non limitatif, que le véhicule est de type automobile, comme par exemple une voiture. Mais, l'invention n'est pas limitée à ce type de véhicule. Elle concerne en effet tout véhicule, notamment terrestre, disposant d'au moins un élément sur lequel peut être solidarisé, de façon amovible, un dispositif de support d'équipement. Par conséquent, il pourra également s'agir d'un camion, d'un car, d'un véhicule utilitaire, d'une machine agricole, d'un engin de chantier, d'un bateau ou d'un avion, par exemple.

Par ailleurs, on considère dans ce qui suit, à titre d'exemple non limitatif, que l'élément (PB) de la voiture est une planche de bord. Mais, l'invention n'est pas limitée à ce type d'élément de véhicule. Elle concerne en effet tout type d'élément de véhicule auquel peut être solidarisé, de façon amovible, un dispositif de support d'équipement. Par conséquent, il pourra également s'agir d'une console, par exemple.

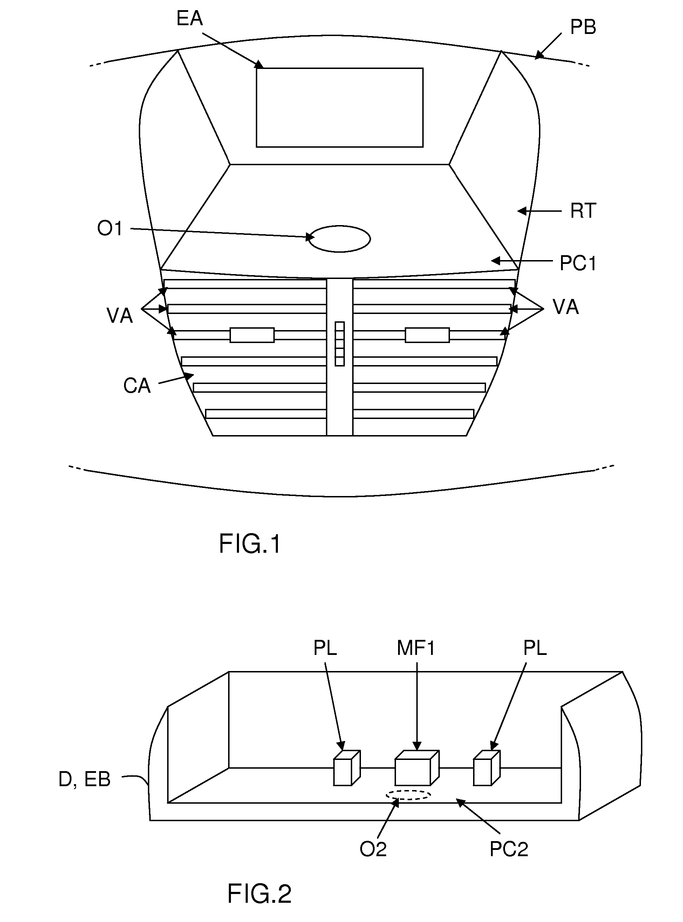

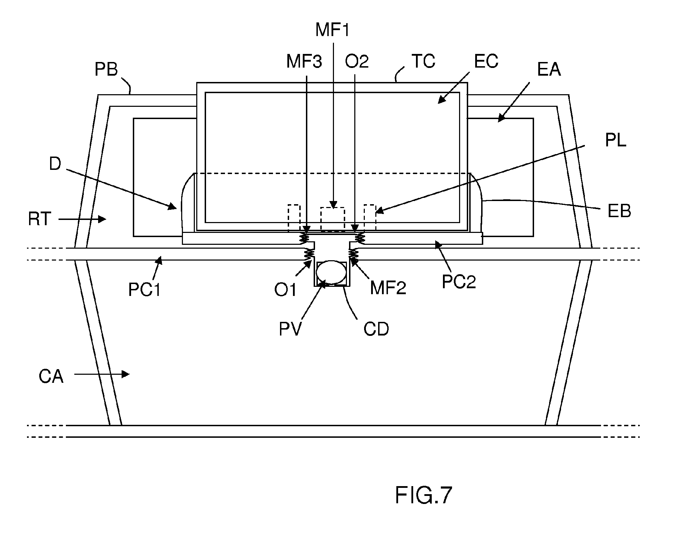

On a schématiquement représenté sur les figures 1 et 7 une partie d'un exemple d'élément PB de voiture, de type planche de bord. Cette partie de la planche de bord PB comprend ici une zone conformée définissant un logement (ou renfoncement) RT au fond duquel est installé un écran d'affichage EA, par exemple à cristaux liquides, servant à l'affichage d'informations relatives au fonctionnement de la voiture et/ou à l'heure et/ou à la température à l'extérieur de l'habitacle de la voiture.

Ce logement RT est ici situé au-dessus de la partie d'extrémité d'un conduit d'aération central CA qui alimente des bouches d'aération avant (droite et gauche) équipées chacune de volets de contrôle VC actionnables par des passagers installés dans la partie avant de l'habitacle. Le logement RT et la partie d'extrémité du conduit d'aération central CA sont séparés par une paroi PC1 dans laquelle a été défini un orifice (ou trou traversant) 01 permettant l'accès audit conduit d'aération central CA via ledit logement RT, et dont on comprendra l'utilité plus loin.

On a schématiquement représenté sur les figures 2 à 6 un exemple de réalisation, non limitatif, d'un dispositif de support D selon l'invention.

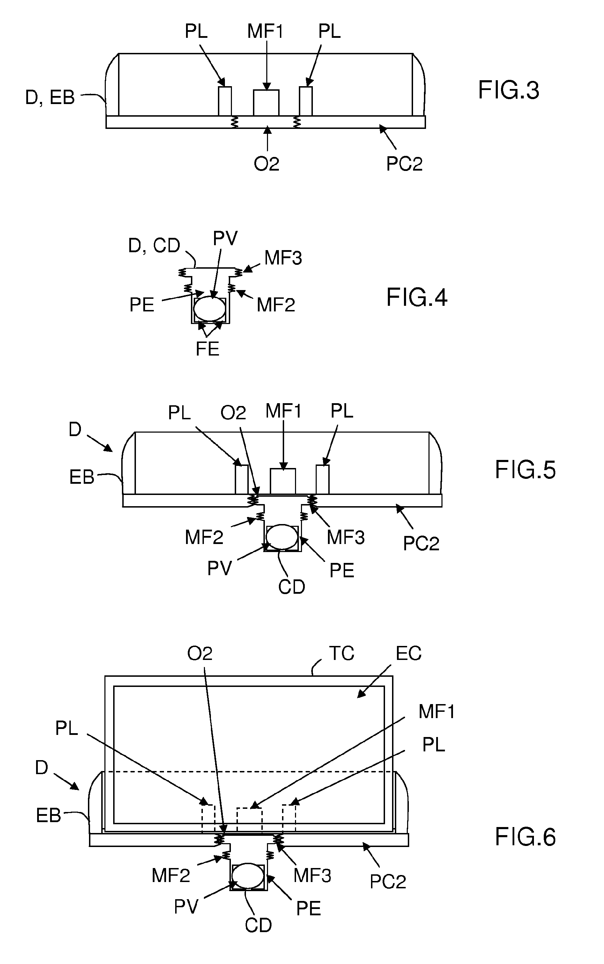

Un tel dispositif de support D est destiné à être solidarisé à un élément de véhicule (ici une planche de bord PB) en vue de supporter un équipement TC (voir figures 6 et 7).

On considère dans ce qui suit, à titre d'exemple non limitatif, que l'équipement TC est un dispositif de navigation (ou d'aide à la navigation), par exemple de type GPS (« Global Positioning System » - système de guidage par satellites), et éventuellement de type dynamique, comportant un écran d'affichage EC. Il est rappelé qu'un dispositif de guidage dynamique est capable de se localiser (positionner) grâce à des informations de positionnement qui lui sont par exemple fournies par un système de positionnement par satellites, comme par exemple le système GPS ou par un réseau de (télé)communication(s) non filaire.

Mais, l'invention n'est pas limitée à ce type d'équipement. Elle concerne en effet tout type d'objet pouvant être solidarisé à un élément situé à l'intérieur d'un véhicule en vue d'être utilisé par un passager. Par conséquent, il pourra également s'agir d'un terminal de communication mobile (ou cellulaire ou portable ou encore nomade), par exemple.

Comme illustré sur les figures 2 à 6, un dispositif (de support) D selon l'invention comprend une embase EB et un corps CD.

L'embase EB, illustrée non limitativement sur les figures 2, 3, 5 et 6, est destinée à être solidarisée à un élément PB du véhicule (ici la planche de bord). Elle est munie de premiers moyens de fixation MF1 qui sont agencés de manière à maintenir un équipement TC de façon amovible.

Dans l'exemple non limitatif illustré, les premiers moyens de fixation MF1 sont définis sur une face « supérieure » de l'embase EB et sont agencés sous la forme d'un mini connecteur USB d'alimentation électrique propre à s'encastrer dans un mini connecteur USB d'alimentation correspondant de l'équipement TC. Par conséquent, les premiers moyens de fixation MF1 assurent ici non seulement la solidarisation (ou fixation) de l'équipement TC à l'embase EB, mais également l'alimentation électrique de l'équipement TC. Mais, cela n'est pas obligatoire. En fait, tout type de moyens de fixation connu de l'homme de l'art peut être ici utilisé dès lors qu'il permet de solidariser (ou fixer) l'équipement TC à l'embase EB de façon amovible, de préférence sans gêner son utilisation. Par conséquent, ils pourront également se présenter sous la forme de moyens de clippage ou d'une sangle élastique.

On notera que l'exemple d'embase EB illustré non limitativement est conformé de manière à être adapté à certains modèles d'équipements (par exemple ceux d'une même marque). Mais, cela n'est pas obligatoire. En effet, elle pourrait être de type universel, de manière à pouvoir supporter tout type d'équipement TC ou au moins des équipements de plusieurs types différents.

On notera également que l'exemple d'embase EB illustré non limitativement comprend sur sa face supérieure, de part et d'autre des premiers moyens de fixation MF1, deux plots de centrage PL destinés à faciliter le positionnement de l'équipement TC sur la face supérieure de l'embase EB, puis sa solidarisation aux premiers moyens de fixation MF1. Bien entendu ces plots de centrage PL sont optionnels.

Le corps CD est solidarisé à l'embase EB, directement (comme illustré non limitativement) ou bien indirectement (c'est-à-dire via une pièce d'adaptation ou d'interfaçage). Il comprend une partie évidée PE dans laquelle est logé un produit volatil PV qui doit être diffusé dans l'habitacle de la voiture.

Ce produit volatil PV peut par exemple être un désinfectant destiné à empêcher la production de moisissures susceptibles d'engendrer des odeurs désagréables, ou bien un parfum par exemple destiné à masquer des odeurs désagréables engendrées par d'éventuelles moisissures.

De préférence, et comme illustré non limitativement, la paroi du corps CD qui délimite sa partie évidée PE comporte au moins une fenêtre FE destinée à permettre à l'air de venir lécher le produit volatil PV. Le corps CD constitue ainsi un diffuseur de parfum.

Par ailleurs, ce corps CD comprend des deuxièmes moyens de fixation MF2 qui sont agencés de manière à solidariser l'embase EB à l'élément PB, en un endroit adapté à cet effet.

Ces deuxièmes moyens de fixation MF2 peuvent se présenter sous différentes formes.

Ainsi, et comme illustré non limitativement sur les figures 3 à 6, ils peuvent être agencés sous la forme d'un filetage externe qui est destiné à coopérer avec un filetage interne de l'orifice 01 (qui est défini dans la paroi d'interface (ou partie choisie) PC1 de la planche de bord PB). Dans ce cas, la solidarisation (amovible) du corps CD à la planche de bord PB se fait par introduction d'une partie « inférieure » du corps CD (qui comprend au moins partiellement la partie évidée PE et donc le produit volatil PV) dans le conduit d'aération central CA via l'orifice 01, puis par vissage du corps CD sur l'orifice 01. Grâce à ce mode d'installation, illustré sur la figure 7, le produit volatil PV est léché par l'air qui circule dans le conduit d'aération central CA et peut donc parfumer (et/ou traiter) cet air avant qu'il ne parvienne au niveau des volets d'aération VA.

Dans une première variante non illustrée, les deuxièmes moyens de fixation MF2 peuvent être agencés sous la forme d'au moins deux pattes élastiques qui définissent des moyens de clippage destinés à coopérer avec l'orifice 01 (qui est défini dans la paroi d'interface (ou partie choisie) PC1 de la planche de bord PB). Dans ce cas, la solidarisation (amovible) du corps CD à la planche de bord PB se fait par introduction de la partie inférieure du corps CD dans le conduit d'aération central CA via l'orifice 01, puis par clippage du corps CD sur l'orifice 01. Grâce à ce mode d'installation, le produit volatil PV peut être également léché par l'air qui circule dans le conduit d'aération central CA.

Dans une seconde variante non illustrée, les deuxièmes moyens de fixation MF2 peuvent être agencés sous la forme d'au moins deux pattes rigides qui définissent des moyens de verrouillage à baïonnette destinés à coopérer avec des logements de l'orifice 01 (qui est défini dans la paroi d'interface (ou partie choisie) PC1 de la planche de bord PB). Dans ce cas, la solidarisation (amovible) du corps CD à la planche de bord PB se fait par introduction de la partie inférieure du corps CD dans le conduit d'aération central CA via l'orifice 01, puis par entraînement en rotation du corps CD sur environ un quart de tour de sorte que les pattes rigides soient immobilisées dans les logements de l'orifice 01. Grâce à ce mode d'installation, le produit volatil PV peut être également léché par l'air qui circule dans le conduit d'aération central CA.

Il est important de noter que le corps CD peut être un accessoire (consommable) que l'on achète dans le commerce. Dans ce cas, comme évoqué précédemment, le dispositif D doit comprendre une pièce d'adaptation ou d'interfaçage assurant la solidarisation (de façon amovible) du corps CD à l'embase EB. Par exemple, la pièce d'adaptation peut comporter une première extrémité, qui est agencée de manière à être solidarisée de façon amovible à une partie « supérieure » du corps CD (opposée à sa partie inférieure), et une seconde extrémité, qui est agencée de manière à être solidarisée de façon amovible à l'embase EB. Par exemple, la première extrémité peut constituer une espèce de coiffe que l'on emmanche en force sur la partie supérieure du corps CD, et la seconde extrémité peut constituer un logement de forme sensiblement homologue à celle de la paroi inférieure de l'embase EB, de manière à pouvoir la recevoir étroitement par emmanchement en force. On comprendra que dans ce cas le corps CD peut être utilisé indépendamment de l'embase EB, mais dans le seul but d'assurer la diffusion du produit volatil PV.

En l'absence d'une pièce d'adaptation ou d'interfaçage, le corps CD est directement solidarisé à l'embase, de préférence de façon amovible. A cet effet, le corps CD comprend des troisièmes moyens de fixation MF3 qui sont agencés de manière à le solidariser de façon amovible à une partie choisie PC2 de l'embase EB. Par exemple, et comme illustré non limitativement, cette partie choisie PC2 est une paroi inférieure de l'embase EB, laquelle est opposée à la paroi supérieure où sont situés les premiers moyens de fixation MF1.

La paroi inférieure qui constitue cette partie choisie PC2 est par exemple munie d'un orifice 02 qui est destiné à coopérer avec les troisièmes moyens de fixation MF3 en vue de la solidarisation du corps CD à l'embase EB.

Comme illustré non limitativement, cet orifice 02 peut par exemple être muni d'un filetage interne. Dans ce cas, les troisièmes moyens de fixation MF3 sont agencés sous la forme d'un filetage externe qui est destiné à coopérer avec le filetage interne de l'orifice 02. La solidarisation (amovible) du corps CD à l'embase EB se fait alors par introduction d'une partie supérieure du corps CD dans l'orifice 02, puis par vissage du corps CD sur l'orifice 02.

Dans une première variante non illustrée, les troisièmes moyens de fixation MF3 peuvent être agencés sous la forme d'au moins deux pattes élastiques qui définissent des moyens de clippage destinés à coopérer avec l'orifice 02 de l'embase EB. La solidarisation (amovible) du corps CD à l'embase EB se fait alors par introduction de la partie supérieure du corps CD dans l'orifice 02, puis par clippage du corps CD sur l'orifice 02.

Dans une seconde variante non illustrée, les troisièmes moyens de fixation MF3 peuvent être agencés sous la forme d'au moins deux pattes rigides qui définissent des moyens de verrouillage à baïonnette destinés à coopérer avec des logements de l'orifice 02 de l'embase EB. La solidarisation (amovible) du corps CD à l'embase EB se fait alors par introduction de la partie supérieure du corps CD dans l'orifice 02, puis par entraînement en rotation du corps CD sur environ un quart de tour de sorte que les pattes rigides soient immobilisées dans les logements de l'orifice 02.

L'assemblage direct du corps CD amovible à l'embase EB permet de constituer un dispositif de support D. Un tel assemblage est illustré sur la figure 5.

On notera qu'il est possible soit de commencer par assembler le dispositif de support D, puis de solidariser ce dernier, au moyen de son corps CD, à la planche de bord PB, soit de commencer par solidariser le corps CD à la planche de bord PB, puis de solidariser l'embase EB au corps CD.

On notera également qu'il est possible soit (comme illustré non limitativement sur la figure 6) de commencer par solidariser l'équipement TC à l'embase EB du dispositif de support D, puis de solidariser ce dernier, au moyen de son corps CD, à la planche de bord PB, soit de commencer par solidariser le dispositif de support D, au moyen de son corps CD, à la planche de bord PB, puis de solidariser l'équipement TC au dispositif de support D.

Le dispositif de support D décrit ci-avant, solidarisé à l'orifice 01 de la planche de bord PB, dans le logement RT, et supportant un équipement TC, est illustré sur la figure 7.

L'invention ne se limite pas aux modes de réalisation de dispositif de support décrits ci-avant, seulement à titre d'exemple, mais elle englobe toutes les variantes que pourra envisager l'homme de l'art dans le cadre des revendications ci-après.

Ainsi, dans ce qui précède on a décrit un exemple de dispositif de support dans lequel le corps et l'embase sont solidarisés l'un à l'autre de façon amovible. Mais, dans une variante, le corps et l'embase pourraient être solidarisés fixement l'un à l'autre.

## Revendications

1. Dispositif (D) de support d'équipement (TC), comprenant une embase (EB) propre à être solidarisée à un élément (PB) d'un véhicule et munie de premiers moyens de fixation (MF1) agencés pour maintenir un équipement (TC) de façon amovible, **caractérisé en ce qu'**il comprend en outre un corps (CD) solidarisé à ladite embase (EB), muni d'une partie évidée (PE) logeant un produit volatil (PV) à diffuser et comprenant des deuxièmes moyens de fixation (MF2) agencés pour solidariser ladite embase (EB) audit élément (PB).

2. Dispositif selon la revendication 1, **caractérisé en ce que** ledit corps (CD) comprend des troisièmes moyens de fixation (MF3) agencés pour le solidariser de façon amovible à une partie choisie (PC2) de ladite embase (EB).

3. Dispositif selon la revendication 2, **caractérisé en ce que** ladite partie choisie (PC2) est une paroi inférieure de ladite embase (EB) munie d'un orifice (O2) propre à coopérer avec lesdits troisièmes moyens de fixation (MF3) en vue de la solidarisation dudit corps (CD).

4. Dispositif selon la revendication 3, **caractérisé en ce que** ledit orifice (O2) est muni d'un filetage interne, et **en ce que** lesdits troisièmes moyens de fixation (MF3) sont agencés sous la forme d'un filetage externe propre à coopérer avec ledit filetage interne dudit orifice (O2).

5. Dispositif selon la revendication 3, **caractérisé en ce que** lesdits troisièmes moyens de fixation (MF3) sont agencés sous la forme d'au moins deux pattes élastiques définissant des moyens de clippage.

6. Dispositif selon l'une des revendications 1 à 5, **caractérisé en ce que** lesdits deuxièmes moyens de fixation (MF2) sont agencés sous la forme d'un filetage externe propre à coopérer avec un filetage interne d'un orifice (01), défini dans une partie choisie (PC1) dudit élément (PB) du véhicule, en vue de la solidarisation dudit corps (CD) de façon amovible par vissage.

7. Dispositif selon l'une des revendications 1 à 5, **caractérisé en ce que** lesdits deuxièmes moyens de fixation (MF2) sont agencés sous la forme d'au moins deux pattes élastiques définissant des moyens de clippage propres à coopérer avec un orifice (O1), défini dans une partie choisie (PC1) dudit élément (PB) du véhicule, en vue de la solidarisation dudit corps (CD) de façon amovible par clippage.

8. Dispositif selon l'une des revendications 1 à 5, **caractérisé en ce que** lesdits deuxièmes moyens de fixation (MF2) sont agencés sous la forme d'au moins deux pattes rigides définissant des moyens de verrouillage à baïonnette propres à coopérer avec des logements d'un orifice (O1), défini dans une partie choisie (PC1) dudit élément (PB) du véhicule, en vue de la solidarisation dudit corps (CD) de façon amovible par rotation de type « quart de tour ».

9. Dispositif selon l'une des revendications 1 à 8, **caractérisé en ce qu'**il comprend une pièce d'adaptation comportant une première extrémité propre à être solidarisée de façon amovible audit corps (CD) et une seconde extrémité propre à être solidarisée de façon amovible à ladite embase (EB).

10. Dispositif selon l'une des revendications 1 à 9, **caractérisé en ce qu'**au moins une partie de ladite partie évidée (PE) du corps (CD) est destinée à être logée à l'intérieur d'un conduit d'aération dudit véhicule, délimité au moins partiellement par une partie choisie (PC1) dudit élément (PB).

11. Utilisation du dispositif de support (D) selon l'une des revendications précédentes pour le support d'un équipement (TC) choisi dans un groupe comprenant au moins un terminal de communication mobile et un dispositif de guidage.
